# EUROPEAN PATENT APPLICATION

(11) **EP 4 764 835 A1**
(43) Date of publication of application: **24.06.2026**
(21) Application number: 25217158.2
(22) Date of filing: 20.11.2025
(51) Int. Cl.: G06F 8/654

(54) **UPDATING METHOD, UPDATING PROGRAM, AND UPDATING SYSTEM FOR SOFTWARE FOR VEHICLE**

(30) Priority: 19.12.2024 JP 2024224211
(71) Applicant: MAZDA MOTOR CORPORATION, Hiroshima 730-8670 (JP)
(72) Inventor: Yosuke, Hashimoto, Aki-gun, Hiroshima (JP); Eiichi, Hojin, Aki-gun, Hiroshima (JP)
(74) Representative: Müller-Boré & Partner Patentanwälte PartG mbB

(57) **Abstract**

An updating method for software for a vehicle includes: (1) receiving an update request to software stored in a memory M of an ECU; (2) identifying a software group to be subjected to an update, on the basis of compatibility information on the software group; and (3) determining that a software update can be performed when the number of times of rewriting is less than a reference value with regard to all memories in which the software group is stored, and determining not to perform the software update when the number of times of rewriting of any one of the memories in which the software group is stored reaches the reference value.

## Description

### [Technical Field]

A technology disclosed herein belongs to a technical field related to an updating method for software for a vehicle, a computer program (i.e. computer program product) for updating software for a vehicle, and/or an updating system for software for a vehicle.

### [Background Art]

OTA (Over The Air) software updates are common in the domain of IoT, and have been introduced for on-board ECUs (Electronic Control Units).

For example, Patent Literature 1 shows a software update system that manages OTA software updates for on-board equipment. In Patent Literature 1, a server distributes software for updating a control device to a software updating device, based on a priority of an update to software for the control device. The software updating device updates the software for the control device by using the software for updating distributed by the server.

Moreover, Patent Literature 2 shows a software management apparatus in which a version management unit manages a version of software for an on-board device, and an update confirmation processing unit determines whether or not there is updatable software, by using communication with a server, vehicle-to-vehicle communication, road-to-vehicle communication, or the like. In Patent Literature 2, when software is updatable, a timing of notification and/or processing related to an update to the software is selected, based on degree of importance of the update to vehicle traveling.

### [Citation List]

### [Patent Literature]

[Patent Literature 1] Japanese Patent Laid-Open No. 2018-132979
[Patent Literature 2] Japanese Patent Laid-Open No. 2005-349878

### [Summary]

### [Problems to be Solved]

Incidentally, at an on-board ECU, software is stored in a rewritable non-volatile memory. Generally, an upper-limit value is set for the number of times of rewriting of a non-volatile memory (for example, a flash memory), and the probability of occurrence of a write error may increase when write is performed over the upper-limit value. Thus, the upper limit of the number of times of rewriting of the non-volatile memory can be reached by an OTA update to a vehicle, and a failure of the update may result. On-board ECUs may be particularly many in number, and have problems in terms of consistency among the individual ECUs and assurance of normal functions.

The technology disclosed herein is made in view of such respects, and an object thereof is to prevent an update failure due to a limit of memory rewriting, and to ensure consistency between or among related functions.

### [Means for Solving the Problems]

One or more of the problems mentioned above are solved by the features disclosed by the independent claims. Further exemplary embodiments are defined by the dependent claims.
According to an aspect, an updating method is provided for software for a vehicle in which a plurality of ECUs (Electronic Control Units) are mounted. The updating method is to be executed by a computer. The updating method includes: receiving an update request to software stored in a memory of the ECU; identifying a software group to be subjected to an update in response to the update request, based on compatibility information on the software group that is used to realize a predetermined function; and determining that a software update that is based on the update request can be performed when the number of times of rewriting is less than a predetermined reference value with regard to all memories in which the software group is stored among those of the plurality of ECUs, and determining not to perform the software update that is based on the update request when the number of times of rewriting of any one of the memories in which the software group is stored reaches the predetermined reference value.

### [Advantageous Effects]

According to the technology disclosed herein, an update failure due to a limit of memory rewriting can be prevented, and consistency between or among related functions can be ensured.

### [Brief Description of Drawings]

FIG. 1 is a block diagram showing a functional configuration for processing of updating software for a vehicle, according to an embodiment.
FIG. 2 is a flowchart showing an exemplary processing in an updating system for software for a vehicle as a whole.
FIG. 3 is a flowchart showing an example of the processing of updating software for a vehicle.
FIG. 4 is a flowchart showing an example of processing of updating information in package data.
FIG. 5 is a diagram showing an example of the package data.
FIG. 6 is a diagram showing an example of determination of whether or not an update that is based on a priority and the number of times of memory rewriting is executable.
FIG. 7 is a flowchart showing an example of operation of a number-of-times calculation module.
FIG. 8 is a block diagram showing an example of a hardware configuration of the updating system for software.
FIG. 9 is a block diagram showing another example of the hardware configuration of the updating system for software.
FIG. 10 is a block diagram showing another example of the functional configuration for the processing of updating software for a vehicle.

### [Mode for Carrying Out the Invention]

Hereinafter, an illustrative embodiment is described in detail with reference to the drawings.

Note that the embodiment below is an illustrative one, without the least intention of limiting the content of the present disclosure by the presence or absence of description, illustrated numerical values, or the like. Moreover, constituent elements included in a system, a server, and the like described in the present description, as well as functions realized by the constituent elements, such as functional blocks, modules, and the like described in the present description, can be implemented on circuitry or processing circuitry programmed to realize the described functions, including a general-purpose processor, such as a CPU (Central Processing Unit) or a GPU (Graphics Processing Unit), application-specific processors, an integrated circuit, ASIC (Application Specific Integrated Circuits), conventional circuits, and/or a combination thereof. A processor includes transistors and other circuits, and is regarded as circuitry or processing circuitry. A processor may be configured to execute a program stored in a memory. The memory includes, for example, a volatile memory such as a RAM, and a non-volatile semiconductor memory such as a ROM or a flash memory.

### 1. An outline of updating method for software

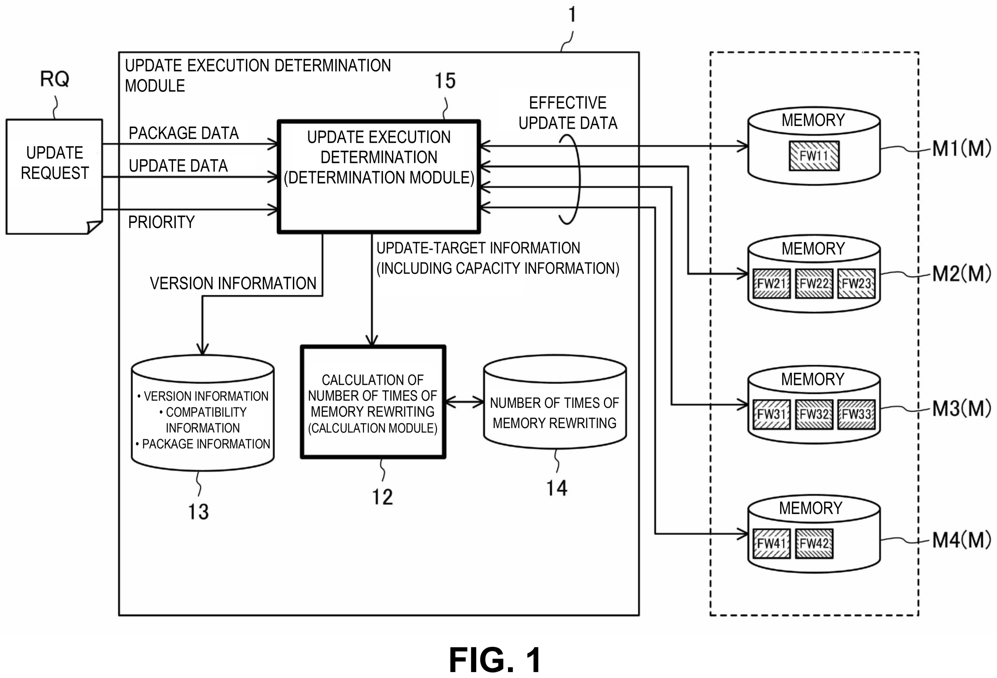

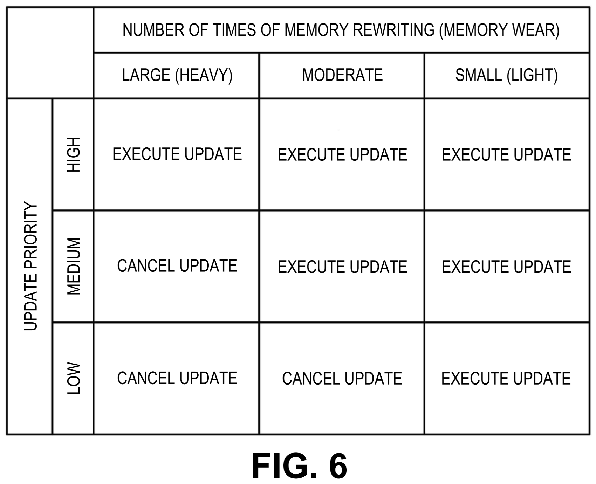

FIG. 1 is a block diagram showing an outline of an updating method for software for a vehicle, according to the embodiment. In FIG. 1, functional components to show the updating method for software are mainly depicted, with the description of hardware components basically omitted. For example, a plurality of ECUs (Electronic Control Units) are mounted in a vehicle V, as shown in FIG. 6, which will be described later. Each of the plurality of ECUs includes a software-rewritable memory M.

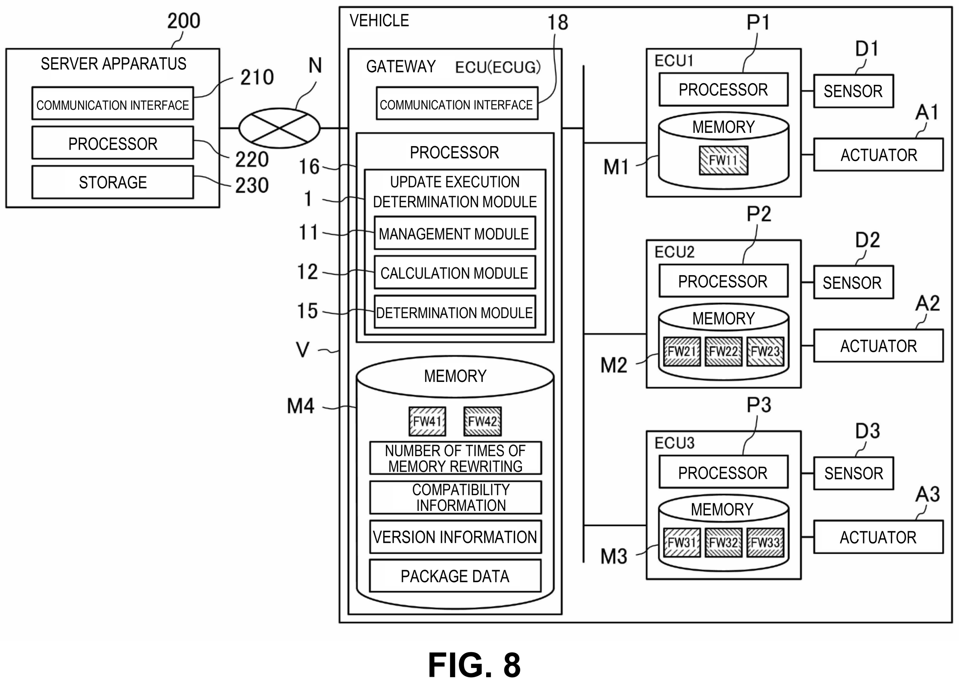

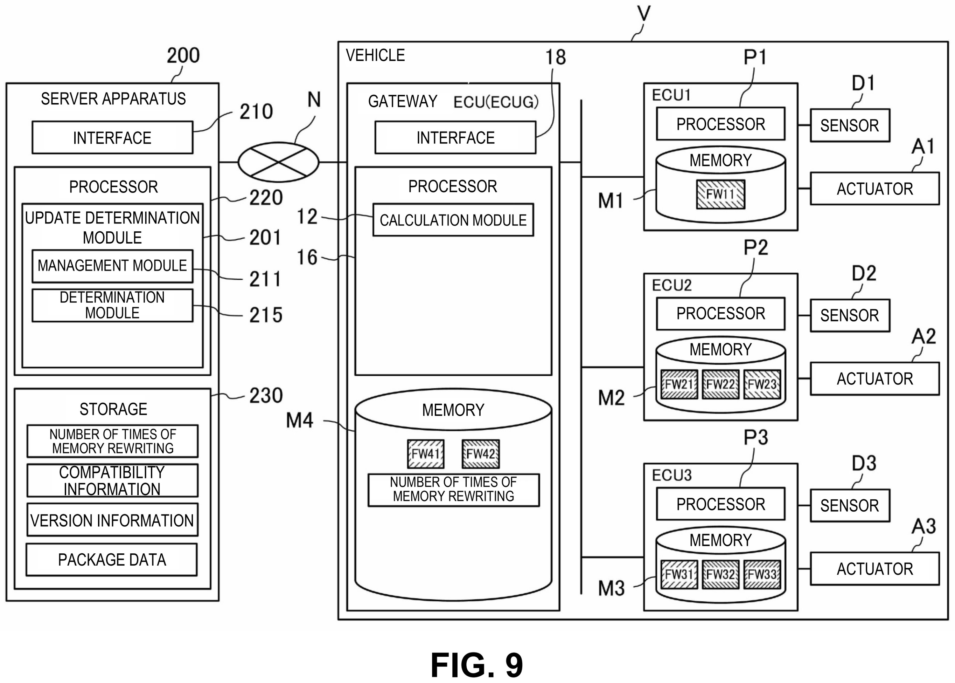

The memory M may be, for example, a non-volatile memory. The non-volatile memory may be, for example, a flash memory. The flash memory has an upper-limit value for the number of times of rewriting. Note that the memory M is not limited to a flash memory, and may be another memory that has an upper limit of the number of times of rewriting. In an example in FIG. 1, depiction of the ECUs is omitted, and only the memories M are depicted. Specifically, in the example in FIG. 1, memories M1 to M4 are illustrated as memories M that can be subjected to a software update. The memories M1 to M4 may be implemented in, for example, mutually different ECUs 1 to 4, as illustrated in FIG. 8 or 9.

The updating method for software may be executed by, for example, an update execution determination module 1. As described above, each function realized in the update execution determination module 1 may be realized by a general-purpose processor such as a CPU or a GPU, application- specific processors, or the like programmed to realize the functions. Although details will be described later in examples of a hardware configuration, the update execution determination module 1 may be provided in a vehicle, or one or some functions thereof may be realized by an external computer and/or an external server provided outside of the vehicle.

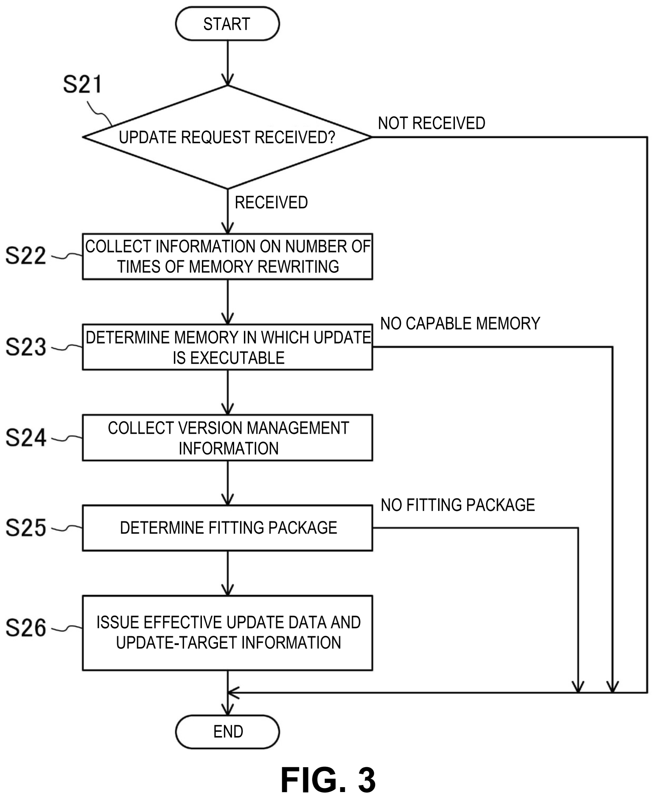

Hereinafter, a specific example of the updating method for software for a vehicle executed by the update execution determination module 1 is described. FIG. 3 is a flowchart showing an exemplary processing of updating software (an example of the updating method for software).

### 1-1. Update request

In step S21, processing of receiving an update request RQ to software stored in the memory of an ECU may be performed by the update execution determination module 1. Specifically, an update request RQ may be issued to the update execution determination module 1. In the update execution determination module 1, when the update request RQ is received, the processing of updating software may be started. In step S21, the update request to software may be received by the update execution determination module 1. In other words, when the update request to software is received, the flow may advance to the next step S22.

The update request RQ may include update data. Specifically, the update data may be data for an update corresponding to the update request RQ. The update data may be designed to be received after it is determined to execute an update, which will be described later.

The update request RQ may include information on an update priority. Update priorities may include a plurality of levels. In addition, update priorities may be managed in the form of scores that is based on a predetermined criterion. In an example in FIG. 6, which will be described later, update priorities have three levels of "high", "medium" and "low". Those having a "high" priority may include, for example, "such an update that if the update is not made, a problem will be caused to normal traveling of a vehicle". More specifically, for example, an update with "high" priority may be a modification to fix a bug in software, or the like. Those having a "medium" priority may include, for example, an update to a function related to traveling. Specifically, included in updates with the "medium" priority may be an update with regard to a memory related to control on traveling operation, steering operation, and/or braking operation. More specifically, those having the "medium" priority may include an update regarding traveling control, steering control, and/or braking control for the purpose of "improving fuel efficiency", "enhancing traveling performance", and/or "realizing traveling, steering, and/or braking to enhance comfort to an occupant". Those having a "low" priority may include an update that is unlikely to directly affect vehicle traveling itself. For example, included in updates having a "low" priority may be an update to a body-related function, sound, lighting, and/or the like of a vehicle. More specifically, as for the "low" priority, "a function for raising and lowering a power window", "control for flashing a turn signal on and off", and/or the like are examples thereof.

The update request RQ may include version information on software. The update request RQ may include compatibility information on software versions. The compatibility information may include information indicating the compatibility between or among software pieces used to realize a predetermined function (e.g., a specified function). In other words, the software pieces included in the software group that are indicated as having compatibility by the compatibility information may need to be updated together, or may be recommended to be updated together. All software pieces associated by compatibility information may be stored in the memory of a single ECU in some cases, and software pieces associated by compatibility information may be stored in the memories of a plurality of ECUs in a scattered manner in other cases.

In the specific examples shown in the drawings, firmware pieces indicated as having compatibility by compatibility information are cross-hatched with common pattern. Firmware may be considered as an example of software. Specifically, in the specific example shown in Fig. 1, firmware FW11 stored in the memory M1 and firmware FW23 stored in the memory M2 are associated by compatibility information. Further, in the specific example of FIG. 1, firmware FW21 stored in the memory M2 and firmware FW33 stored in the memory M3 are associated by compatibility information.

Similarly, in the specific example of FIG. 1, firmware FW22 stored in the memory M2, firmware FW32 stored in the memory M3, and firmware FW42 stored in the memory M4 are associated by compatibility information.

Moreover, in the specific example of FIG. 1, firmware FW31 stored in the memory M3 and firmware FW41 stored in the memory M4 are associated by compatibility information. In other words, the firmware FW11 and the firmware FW23 may constitute a firmware group (corresponding to a software group). Similarly, the firmware FW21 and the firmware FW33 may constitute a firmware group. The firmware FW22, the firmware FW32, and the firmware FW42 may constitute a firmware group, and the firmware FW31 and the firmware FW41 constitute a firmware group. Note that a data format of compatibility information may be any data format as long as compatibility can be recognized. For example, for compatibility information, version information on software pieces may be used to manage the mutual compatibility between or among the software pieces.

The compatibility information may be managed as package data. The package data may be mapped to version information on each software piece. In the package data, software pieces for related functions may be associated with each other. In the package data, software pieces for related functions may be associated with each other by using version information on each of the software pieces. The package data may be registered beforehand, or the package data may be inputted externally or may be updated.

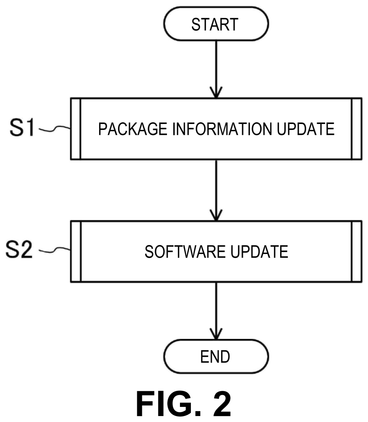

In addition, the package data may be generated by the update execution determination module 1. Specifically, as operation of the updating system for software as a whole, after package information is updated, determination of whether to perform a software update, which is described by using the flow in FIG. 3, may be performed as shown in FIG. 2. Note that a package information update (step S1) in FIG. 2 is not an essential constituent element of the present disclosure.

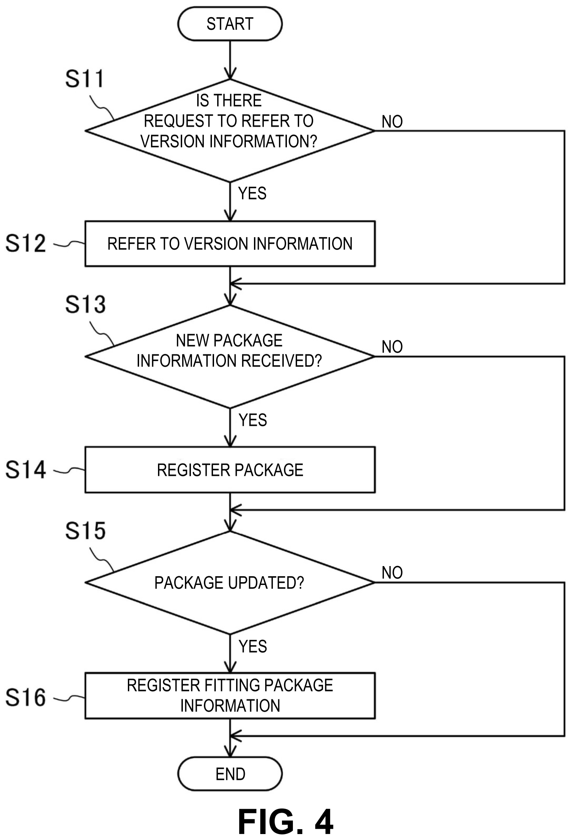

FIG. 4 shows an example of processing of updating information in the package data described at step S1 in FIG. 2. When there is a request to refer to package data or version information on software pieces, the version information may be extracted from a data storage 13 and issued (step S11, S12).

When new package data is received, information therein may be stored in the data storage 13 (step S13, S14). When an update to a package is performed, for example, when an OTA update is performed, applied package data may be stored in the data storage 13 (step S15, S16).

Note that the data storage 13 may be any storage area (for example, memory) to which the update execution determination module 1 can refer, and a specific hardware configuration is not limited particularly. The same applies to a below-mentioned data storage 14.

### 1-2. Information on the number of times of memory rewriting

Referring back to FIG. 3, in step S22, the update execution determination module 1 may refer to information on the number of times of rewriting of a registered memory. The update execution determination module 1 may include a calculation module 12 that calculates the number of times of memory rewriting.

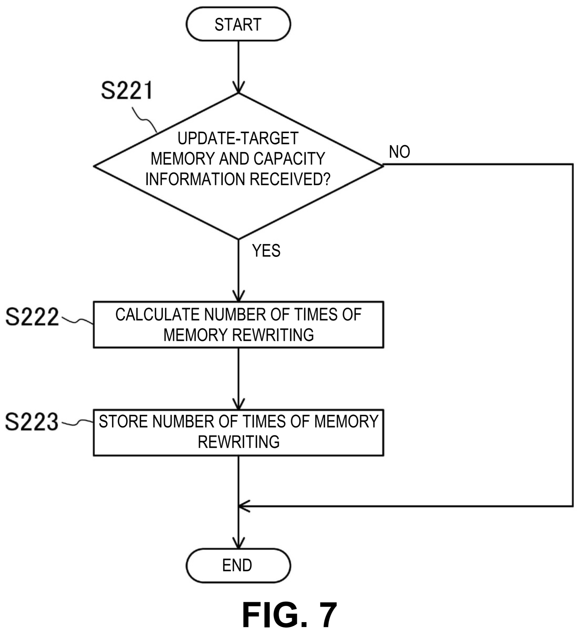

A flowchart in FIG. 7 shows an example of operation of the calculation module 12. In step S221, the calculation module 12 may receive information on a memory (hereinafter, referred to as "update-target memory") that is a target of the update request, and information on a capacity required for the update.

When the information on the update-target memory and the information on the capacity required for the update are received, the flow may advance to the next step S222. In step S222, the calculation module 12 may calculate the number of times of rewriting of the memory, on the basis of the information on the capacity required for the update.

The calculation module 12 may refer to the hitherto number of times of rewriting stored in a storage, add thereto the calculated number of times of rewriting, and make the result of the addition as the new number of times of rewriting of the memory. In the next step S223, the calculation module 12 may store, in the data storage 14, the new number of times of rewriting of the memory obtained through the calculation in step S222.

For the information on the number of times of rewriting of the update-target memory, addition to the already stored (hitherto) number of times of rewriting may be performed.

### 1-3. Determination of execution of update

In step S23 in FIG. 3, the update execution determination module 1 may determine a memory M in which an update is executable. For example, first, the update execution determination module 1 may identify a software group to be subjected to the update in response to the update request, on the basis of the compatibility information. Note that when package data is stored in a storage, the software group to be subjected to the update may be identified on the basis of the package data.

Next, when the number of times of rewriting of every one of memories in which the software group is stored is less than a predetermined reference value (e.g., a specified reference value), the update execution determination module 1 determines to perform the software update that is based on the update request RQ.

When the number of times of rewriting of any one of the memories M in which the software group is stored reaches the predetermined reference value, it may be determined not to perform the software update that is based on the update request RQ.

The predetermined reference value may be set by giving a predetermined margin (e.g., a specified margin) for an upper-limit value for the number of times of rewriting of each memory. The size of the predetermined margin is not limited particularly and can be set arbitrarily.

Moreover, for the size of the predetermined margin, a fixed value may be set, or the size of the predetermined margin may be configured to be updatable during operation. For example, when a priority is set in the update request, for the predetermined reference value, a higher upper-limit value as an allowable number of times of memory rewriting may be set for a higher priority.

FIG. 6 shows an example of determination of whether or not an update is executable, which is based on a priority and the number of times of memory rewriting.

In FIG. 6, when the update priority is set "low", the update execution determination module 1 may determine to perform the software update that is based on the update request when the number of times of memory rewriting is relatively small. When the update priority is set "low", the update execution determination module 1 may determine not to perform the software update that is based on the update request when the number of times of memory rewriting is relatively moderate or large. In other words, the predetermined reference value serving as a reference for determination of execution of an update may be set relatively low. In still other words, the predetermined margin may be relatively large for the upper-limit value for the number of times of memory rewriting.

When the update priority is set "medium", the update execution determination module 1 may determine to perform the software update that is based on the update request when the number of times of memory rewriting is relatively small or moderate. When the update priority is set "medium", the update execution determination module 1 may determine not to perform the software update that is based on the update request when the number of times of memory rewriting is relatively large. In other words, the predetermined reference value serving as a reference for determination of execution of an update may be set to an intermediate value between the "low" priority and the "high" priority. In still other words, the predetermined margin may be set moderate for the upper-limit value for the number of times of memory rewriting.

When the update priority is set "high", the update execution determination module 1 may determine to perform the software update that is based on the update request even if the number of times of memory rewriting is relatively large. In other words, the predetermined reference value serving as a reference for determination of execution of an update may be set high compared to the "low" priority and the "medium" priority. In still other words, the predetermined margin may be smaller than when the priority is "low" and "medium", for the upper-limit value for the number of times of memory rewriting.

### 1-4. Collection of version management information

In step S24 in FIG. 3, the update execution determination module 1 may refer to version information on the software that is the target of the update request. When a version in the update request coincides with a current version, the software is not subjected to the update, for example. In other words, the update execution determination module 1 may terminate the updating processing, without performing the software update that is based on the update request.

Then, when there is another update request, the processing in step S21 may be performed. When there is no other update request, the update execution determination module 1 may fall in a wait state until a next update request arrives. Note that "1-4. Collection of version management information" is not an essential element in the updating method for software for a vehicle. When the processing in and after "1-4. Collection of version management information" is not performed, the update execution determination module 1 may transmit, to the update-target memories that are targets of the update request, update data (hereinafter, also referred to as "effective update data") corresponding to each memory M and update-target information including the information on the capacity for the update, on the basis of a determination result in "1-3. Determination of execution of update". In the memories M that have received the effective update data, an update may be performed by using the effective update data.

### 1-5. Determination of fitting package

In step S25 in FIG. 3, the update execution determination module 1 may determine whether or not there is a package that fits the update that is based on the update request. For example, the update execution determination module 1 may determine whether or not there is a package that fits the update that is based on the update request, on the basis of information on the memories M in which the update is executable in "1-3. Determination of execution of update", and the version information referred to in "1-4. Collection of version management information". When there is a fitting package, the flow may advance to the next step S26. When there is no fitting package, it may be determined that the software update that is based on the update request is not executable, and the processing may be terminated.

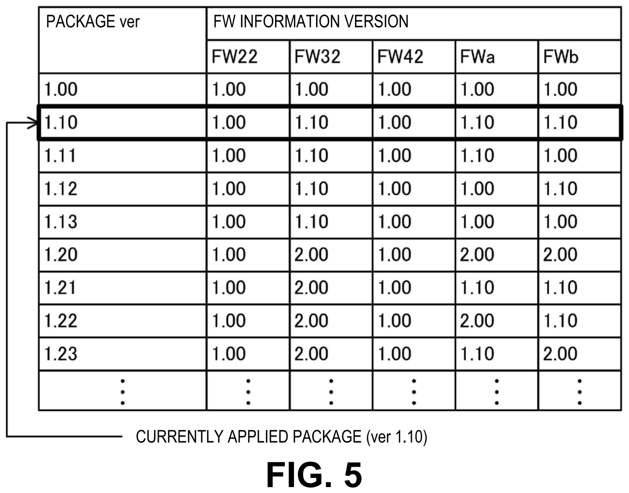

FIG. 5 shows an example of package data. The package data may include a package version number and version information on each firmware piece mapped thereto. The firmware FW22, the firmware FW32, the firmware FW42 shown in FIG. 1, and in addition, firmware pieces Fwa, FWb, which are not depicted in FIG. 1, are registered as package data in the specific example shown in FIG. 5. Moreover, in the specific example, version information on each of the firmware pieces FW22, FW32, FW42, Fwa, FWb is stored, and mapped to version information on a package.

In the specific example of FIG. 5, in an initial package (Ver 1.00), the versions of all of the firmware pieces FW22, FW32, FW42, Fwa, FWb are Ver 1.00. In Ver 1.10 currently applied, FW32, Fwa, FWb are Ver 1.10. In other words, an example is shown in which when an update from Ver 1.00 to Ver 1.10 is performed as a package, FW32, Fwa, FWb need to be updated to Ver 1.10 at the same time.

As described above, by performing management based on a package, it may be possible to prevent software from being updated in a state where the compatibility among related functions is not ensured. Note that "1-5. Determination of fitting package" is not an essential element in the updating method for software for a vehicle. When the processing in and after "1-5.

Determination of fitting package" is not performed, the update execution determination module 1 may transmit, to the update-target memories that are targets of the update request, the effective update data corresponding to each memory M and the update-target information including the information on the capacity for the update, without referring to the version information on the memories in "1-4. Collection of version management information".

In the memories M that have received the effective update data, an update may be performed by using the effective update data.

### 1-6. Issuance of effective update data and update-target information

In step S26 in FIG. 3, the update execution determination module 1 may transmit, to the update-target memories, the effective update data corresponding to each memory and the update-target information including the information on the capacity for the update, on the basis of information on the fitting package determined in "1-5. Determination of fitting package".

### 1-7. Example

Hereinafter, a specific example is illustrated. In the example, it is assumed that an update request with the "medium" priority to update only the firmware FW32 to ver 2.00 in the table in FIG. 5 is received.

As shown in FIG. 5, it is assumed that the package version at the time of receiving the update request is version 1.10.

It is assumed that determination of whether or not an update is executable is performed on the basis of the table in FIG. 6. Moreover, it is assumed that effective update data for versions in and after version 1.10 has not been released.

In this specific example, in step S21 in FIG. 3, the update execution determination module 1 receives the update request RQ with the "medium" priority to update only the firmware FW32 to version 2.00 as mentioned above.

In this specific example, in step S22, the update execution determination module 1 refers to information on the number of times of rewriting of the memory M3 of an ECU (ECU 3 in the example in FIG. 7, which will be described later) in which the firmware FW32 is stored. It is assumed here that the number of times of rewriting applies to "small" in FIG. 6.

In this specific example, in step S23, the update execution determination module 1 determines a memory M in which an update is executable. Since the number of times of memory rewriting is "small", the update execution determination module 1 determines that the software update that is based on the update request can be performed in the memory M3.

In this specific example, in step S24, the update execution determination module 1 refers to version information on the firmware FW32. Since the version of the firmware FW32 is version 1.10, eligibility to be updated is determined.

In this specific example, in step S25, it is determined whether or not there is a fitting package. A package that fits when the firmware FW32 is updated to version 2.00 is version 1.20. Since version 1.20 (FW22: version 1.00, FW32: version 1.10, FW42: version 1.00, FWa: version 1.10, FWb: version 2.00) has not been released as described above, the package of version 1.10 is maintained, without performing the firmware update that is based on the update request.

### 2. Hardware configuration

Hereinafter, examples of a hardware configuration are described. Note that in the description below, parts related to the subject of the disclosed technology are briefly described, and a description of components remotely related to the subject of the disclosed technology is omitted.

Moreover, although components corresponding to the above-described components in FIG. 1 are denoted by the same signs to facilitate the understanding of the technology, it is not intended that the technical scope of the present disclosure is limited by such denotation.

### 2-1. Example (1) of hardware configuration

The present configuration example is an example in which a computing device including a gateway ECU or another ECU corresponds to a computer that executes the updating method for software.

FIG. 8 is a block diagram showing an example of the hardware configuration of the updating system for software. In the example in FIG. 8, the update execution determination module 1 is disposed in a vehicle V. The updating system for software includes the vehicle V. A plurality of ECUs are mounted in the vehicle V.

In the example in FIG. 8, the plurality of ECUs includes a gateway ECU (hereinafter, referred to as "ECU G" in some cases), an ECU 1, an ECU 2, and an ECU 3. In other words, the ECU 1, the ECU 2, the ECU 3, and the ECU G may be considered as examples of a first ECU and/or a second ECU.

In the example in FIG. 8, the gateway ECU includes a communication interface 18. The communication interface 18 is connected to the Internet N and includes circuitry for communicating with a computer, a server apparatus, an information terminal, and the like provided outside of the vehicle. In the example, the communication interface 18 communicates, via the Internet N, with a server apparatus 200 disposed outside of the vehicle.

An update request to software stored in a memory of an ECU is inputted into the communication interface 18. The update request received via the communication interface 18 is transmitted to a processor 16. For example, the update request is outputted from a communication interface 210 of the server apparatus 200 and transmitted to the communication interface 18 via the Internet.

In the example in FIG. 8, the gateway ECU includes the processor 16. The processor 16 is configured to realize the above-described functions of the update execution determination module 1 by executing a program stored in a memory M4. In the description below, for a functional module realized by the processor, it is stated that the processor is equipped with (e.g., has or includes) the functional module.

In the example in FIG. 8, the processor 16 is equipped with the update execution determination module 1. The update execution determination module 1 maz include a management module 11. The management module 11 may manage the number of times of rewriting of a memory M included in each of the plurality of ECUs. The management module 11 may manage version information on software stored in each ECU.

The management module 11 may manage compatibility information on the versions of software pieces included in a software group that is used to realize a predetermined function. As described above, the compatibility information may be managed as package data. The numbers of times of rewriting of the memories M, the version information on the software, or the compatibility information on the versions in each software group may be stored in the memory M4. The memory M4 may be, for example, a memory including functions as the data storage 13, the data storage 14, and the memory M4 in FIG. 1.

In the example in FIG. 8, the update execution determination module 1 includes a calculation module 12. The calculation module 12 may include a function of calculating the number of times of memory rewriting. Since an example of operation of the calculation module 12 has been already described with reference to FIG. 7, a description thereof is omitted here.

In the example in FIG. 8, the update execution determination module 1 includes a determination module 15. The determination module 15 may have a function of performing various determination processing in the update execution determination module 1. For example, as illustrated in "1-3. Determination of execution of update" described above, the determination module 15 may determine that a software update that is based on an update request can be performed when the number of times of rewriting is less than a predetermined reference value, with regard to all memories in which a firmware group is stored among those of the ECUs 1 to 4.

For example, when firmware FW11 and firmware FW23 constitute a firmware group, it may be determined that a software update that is based on an update request can be performed when the number of times of rewriting is less than the predetermined reference value, with regard to both the memory M1 in which the firmware FW11 is stored and the memory M2 in which the firmware FW23 is stored.

When the number of times of rewriting of any one of the memories in which the firmware group is stored reaches the predetermined reference value, it may be determined not to perform the software update that is based on the update request.

In the above-mentioned example, when the number of times of rewriting of any one of the memory M1 in which the firmware FW11 is stored and the memory M2 in which the firmware FW23 is stored reaches the predetermined reference value, it may be determined not to perform the software update that is based on the update request.

In the example in FIG. 8, the gateway ECU includes a memory M14. The memory M14 may be, for example, a non-volatile memory. The memory M14 may be, for example, a flash memory. Firmware pieces FW41, FW42 are stored in the memory M14. The numbers of times of rewriting of the memories M, the compatibility information, the version information, and/or the package data described above may be stored in the memory M14. Note that the numbers of times of rewriting of the memories M, the compatibility information, the version information, and/or the package data may be stored in a storage medium other than the memory M14.

The configuration of the storage medium here is not limited particularly. For example, a non-volatile memory such as a ROM or a flash memory may be used, or a semiconductor recording medium such as an SDD (Solid State Drive) may be used.

In the example in FIG. 8, a plurality of ECUs (for example, the ECU 1, the ECU 2, the ECU 3) are connected to the gateway ECU via an in-vehicle network.

In the example in FIG. 8, the ECU 1 includes a processor P1 and the memory M1. The processor P1 may communicate with another ECU and/or control an actuator A1 by executing a program stored in the memory M1. The ECU 1 may control the actuator A1, for example, on the basis of a result of measurement by a sensor D1. The ECU 1 may control the actuator A1, for example, regardless of a result of measurement by the sensor D1. Since the memory M1 is as already described, a description thereof is omitted here.

In the example in FIG. 8, the ECU 2 includes a processor P2 and the memory M2. The processor P2 may communicate with another ECU and/or control an actuator A2 by executing a program stored in the memory M2. The ECU 2 may control the actuator A2, for example, on the basis of a result of measurement by a sensor D2. The ECU 2 may control the actuator A2, for example, regardless of a result of measurement by the sensor D2. Since the memory M2 is as already described, a description thereof is omitted here.

In the example in FIG. 8, the ECU 3 includes a processor P3 and the memory M3. The processor P3 may communicate with another ECU and/or control an actuator A3 by executing a program stored in the memory M3.

The ECU 3 may control the actuator A3, for example, on the basis of a result of measurement by a sensor D3. The ECU 3 may control the actuator A3, for example, regardless of a result of measurement by the sensor D3. In the description below, the sensors D1, D2, D3 are collectively referred to as the sensors D. Similarly, the actuators A1, A2, A3 are collectively referred to as the actuators A.

The sensors D may be configured to measure a traveling state, a traveling environment, an operating state, and/or the like of an automobile 1. The sensors D may be configured to be able to acquire information on operation by a driver of the vehicle V.

The sensors D may be configured to be able to measure a state of an occupant in the vehicle V. For example, the sensors D may include one or more sensors selected from a group (1)-(9) including the following: (1) a plurality of cameras that are installed on a body and the like of the automobile 1 and capture an external environment; (2) a plurality of radars that are installed on the body and the like of the automobile 1 and detect an object and the like outside; (3) a vehicle speed sensor that detects an absolute speed of the automobile 1; (4) an accelerator opening degree sensor that detects a pedaling amount of an accelerator pedal of the automobile 1; (5) a steering angle sensor that detects a rotation angle (e.g., steering angle) of a steering wheel of the automobile 1; (6) a brake sensor that detects a pedaling amount of a brake pedal of the automobile 1; (7) a position sensor that detects a position of the automobile 1 (e.g., vehicle position information) by using the Global Positioning System (Global Positioning System: GPS); (8) an in-vehicle camera that is installed on an in-vehicle mirror, a dashboard, and/or the like of the automobile 1 and captures a facial expression and/or a posture of a driver, an internal environment, and/or the like; and (9) an in-vehicle sensor that acquires biological information (e.g., body temperature, heart rate, respiration, and/or the like) on the driver.

The actuator A may be configured to operate by receiving control from the ECU. The actuator A may include, for example, an actuator or actuators that realize, or are related to, one or more operations selected from those of an engine, a traveling motor, a brake, a steering system, or a transmission. The actuator A may include, for example, an actuator for a so-called body system, such as for an airbag or a power window. Each actuator may include an ECU, or may be configured to operate by receiving control from a higher-order ECU without including an ECU.

In the example in FIG. 8, the server apparatus 200 includes the communication interface 210. The communication interface 210 may be connected to the Internet N and include circuity for communicating with another server, a computer, the vehicle V, and/or the like. In the example, the communication interface 210 communicates with the communication interface 18 of the vehicle V via the Internet N.

In the example in FIG. 8, the server apparatus 200 includes a processor 220 and a storage 230. The processor 220 may be configured to realize a predetermined function by executing a program stored in the storage 230. For example, the processor 220 may create an update request RQ when update information for the vehicle V is released. Then, the processor 220 may transmit, via the communication interface 210, the update request RQ to the update-target vehicle.

### 2-2. Example (2) of hardware configuration

The present configuration example is an example in which a server apparatus 200 configured to be able to communicate with a vehicle V corresponds to a computer that executes the updating method for software.

FIG. 9 is a block diagram showing another example of the hardware configuration of the updating system for software. The example in FIG. 9 is different from the configuration in FIG. 8 in that part of the functionality of the update execution determination module 1 is disposed in the server apparatus 200.

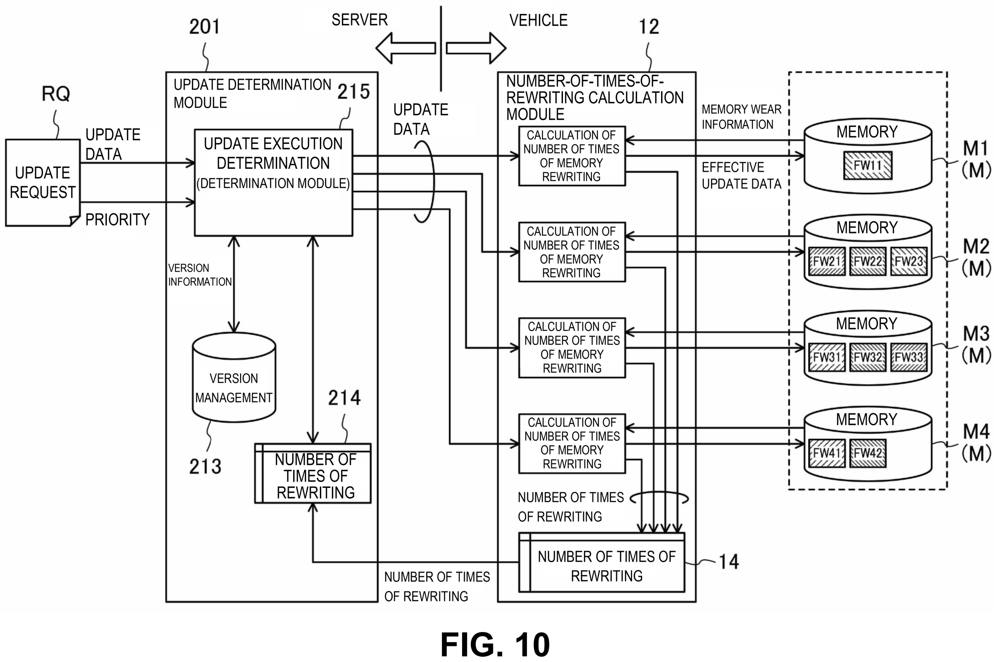

In connection therewith, the block diagram showing the functional configuration in FIG. 1 is changed as in FIG. 10. Note that in FIG. 9, constituent elements corresponding to those in FIG. 8 are denoted by common signs. Similarly, in FIG. 10, constituent elements corresponding to those in FIG. 1 are denoted by common signs. The description below is centered on different points from "1. Outline of updating method for software" and "2-1. Example (1) of hardware configuration" described above.

In the exemplary configuration in FIG. 9, a plurality of ECUs are mounted in the vehicle V, as in FIG. 8. In the example in FIG. 9, the plurality of ECUs includes a gateway ECU (ECU G), an ECU 1, an ECU 2, and an ECU 3. The ECU 1, the ECU 2, and the ECU 3, as well as sensors D and actuators connected to the ECUs, are in common with those in "2-1. Example (1) of hardware configuration" described above, and a specific description thereof is omitted here.

In the example in FIG. 9, the gateway ECU includes a processor 16. The processor 16 may be configured to realize the above-described functions of the update execution determination module 1 by executing a program stored in a memory M4. In the example in FIG. 9, the processor 16 includes only the calculation module 12 of the update execution determination module 1 depicted in FIG. 8. Processing performed by the calculation module 12 will be described later.

In the example in FIG. 9, the gateway ECU includes a memory M14. The memory M14 may be, for example, a non-volatile memory. The memory M14 may be, for example, a flash memory. In the example in FIG. 9, firmware pieces FW41, FW42 are stored in the memory M14. The numbers of times of rewriting of memories M may be stored in the memory M14, as in the case of FIG. 8. On the other hand, unlike the case of FIG. 8, compatibility information, version information, and package data do not have to be stored.

Moreover, in the example in FIG. 9, the gateway ECU includes a communication interface 18 similar to that in FIG. 8.

In the configuration in FIG. 9, the server apparatus 200 includes a communication interface 210. The configuration of the communication interface 210 may be the same as that in FIG. 8.

In the example in FIG. 9, the server apparatus 200 includes a processor 220 and a storage 230. The processor 220 may be configured to realize a predetermined function by executing a program stored in the storage 230. In the example in FIG. 9, the processor 220 is equipped with an update execution determination module 201 that corresponds to the update execution determination module 1 in FIG. 8.

In the example in FIG. 9, the update execution determination module 201 is equipped with a management module 211 that corresponds to the management module 11, and a determination module 215 that corresponds to the determination module 15.

Update information (hereinafter, simply referred to as "update information") that is acquired from each vehicle V and is used to update software for the vehicle may be stored in the storage 230.

The update information may be mapped to identification information for identifying an acquisition-source vehicle V and stored. The update information may include the above-described compatibility information, version information, and package data.

Each of the compatibility information, the version information, and the package data is as in the above-described embodiment, and a description thereof is omitted here. Further, information on rewriting of the memories M acquired from each vehicle V may be recorded in the storage 230.

Next, with reference to FIGS. 3 and 10, a description is given of operation, as an updating system, in the case where part of the functionality of the update execution determination module 1 is disposed in the server apparatus 200. The description here is centered on different points from the above-described embodiment (FIG. 1).

In this specific example, in step S21 in FIG. 3, an update request RQ to firmware for the ECUs 1 to 3 and the gateway ECU of a vehicle V is received by the update execution determination module 201 in the server apparatus 200. The update request to software is received by the update execution determination module 201 as in the embodiment. In other words, when the update request to software is received, the flow advances to the next step S2. The specific content of the update request RQ is the same as in FIG. 1.

In this specific example, in step S22, the update execution determination module 201 refers to registered information on the numbers of times of memory rewriting, with regard to the vehicle V (hereinafter, referred to as the "target vehicle V") that is a target of the update request RQ. For example, after the update request RQ is received, information on the numbers of times of rewriting of memories M may be acquired by requesting the information on the numbers of times of rewriting of the memories M from the target vehicle V.

A method for the target vehicle V to acquire the information on the numbers of times of rewriting of the memories M is as in the above-described embodiment. For example, the calculation module 12 in the target vehicle V may access the memories M (for example, memories M1 to M4) and acquire wear information on the memories M. Then, the calculation module 12 in the target vehicle V may calculate the numbers of times of rewriting of the memories M, on the basis of the acquired wear information on the memories M.

The number of times of rewriting of each memory M may be aggregated and transmitted to the server apparatus 200 via the communication interface 18.

In this specific example, in step S23, the update execution determination module 201 determines a memory M in which an update is executable. The specific content of determination processing is the same as in the above-described embodiment. Specifically, the update execution determination module 201 may identify a software group to be subjected to an update in response to the update request, on the basis of compatibility information.

Next, when the number of times of rewriting of every one of the memories in which the firmware group is stored is less than a predetermined reference value, the update execution determination module 201 may determine to perform the software update that is based on the update request RQ.

When the number of times of rewriting of any one of the memories M in which the software group is stored reaches the predetermined reference value, it may be determined not to perform the software update that is based on the update request RQ.

In this specific example, in step S24, the update execution determination module 201 refers to version information on the software that is the target of the update request.

In this specific example, in step S25, it is determined whether or not there is a fitting package. When there is a fitting package, the flow may advance to the next step S26. When there is no fitting package, it may be determined that the software update that is based on the update request is not executable, and the processing may be terminated.

In this specific example, in step S26, the update execution determination module 201 transmits, to the gateway ECU (see FIG. 9) in the vehicle V, an update request and update-target information including update data and information on a capacity for the update, on the basis of information on the fitting package determined in "1-5. Determination of fitting package". For example, the gateway ECU (see FIG. 9) may transmit effective update data to the update-target memories, on the basis of the received update-target information.

### 3. Summary

As described above, a first aspect of the present disclosure relates to an updating method for software for a vehicle in which a plurality of ECUs (for example, the ECU 1, the ECU 2, the ECU 3, the ECU G) are mounted.

The updating method for software includes, by a computer, executing following steps (1) to (3).

The updating method for software includes (1) receiving an update request RQ to software stored in a memory of the ECU. For example, the update request RQ may be received by the ECU G via the communication interface 18.

The updating method for software includes (2) identifying a firmware group (e.g., corresponding to software pieces) to be subjected to an update in response to the update request, based on (in other words, on the basis of) compatibility information on the firmware group that is used to realize a predetermined function. In the present disclosure, the "predetermined function" may be a function that is determined or specified beforehand by e.g., a user and/or a developer of the software group (e.g., firmware group). In some circumstances, the "predetermined function" may be changed to a function that is different from the one determined or specified beforehand, if deemed necessary.

As described above, the compatibility information may include information indicating the compatibility between or among firmware pieces used to realize the predetermined function. For the compatibility information, version information on the software pieces may be used to manage the mutual compatibility between or among the software pieces.

The updating method for software includes (3) determining that a software update that is based on the update request RQ can be performed when the number of times of rewriting is less than a predetermined reference value, with regard to all memories in which the firmware group is stored among those of the plurality of ECUs. In the present disclosure, the "predetermined reference value" may be a reference value that is determined or specified beforehand. In some circumstances, the "predetermined reference value" may be changed from the value that is determined or specified beforehand, if deemed necessary.

To describe an example, for example, when the firmware FW11 and the firmware FW23 constitute a firmware group and the firmware group is to be subjected to an update that is based on the update request RQ, it may be determined that a software update that is based on the update request RQ can be performed when the numbers of times of rewriting of the memory M1 and the memory M2 are less than the predetermined reference value.

In addition, the update method for software includes determining not to perform the software update that is based on the update request when the number of times of rewriting of any one of the memories in which the firmware group is stored reaches the predetermined reference value.

For example, in the above example, when the firmware FW11 and the firmware FW23 constitute a firmware group and the firmware group is to be subjected to an update that is based on the update request RQ, it may be determined not to perform the software update that is based on the update request RQ when the number of times of rewriting of the memory M1 or the memory M2 reaches the predetermined reference value.

According to the aspect described above, an OTA failure due to a limit of memory rewriting can be prevented. Moreover, consistency between or among related functions can be ensured because, in response to an update request RQ, it is determined whether an update can be performed, by treating those functions that realize a predetermined function as one by using compatibility information on a software group (for example, a firmware group) used to realize the predetermined function.

In a second aspect of the present disclosure, the update request may include an update priority in the first aspect described above. Then, determining whether to perform the software update that is based on the update request may be performed on the basis of comparison of the numbers of times of rewriting of the memories M with the reference value, and the update priority.

As a third aspect, the higher the update priority is, the higher the predetermined reference value may be set, in the second aspect described above.

By performing determination using a priority as described above, a reference to determine to perform an update can be relaxed for a higher-priority function, such as a function of greater importance, and an update that is based on an update request RQ can be performed. Thus, for an update to an important function, it is possible to perform the update more reliably, while preventing a limit of memory rewriting from being reached.

In a fourth aspect of the present disclosure, the compatibility information may be included in package data in which software pieces for related functions are associated with each other by using version information on each software piece, in any one aspect of the first to third aspects described above.

In a fifth aspect of the present disclosure, the update request may include version information on the software to be updated, in any one aspect of the first to third aspects described above. Update data to be used for the update may be provided as package data as the software group. In the updating method for software according to the fifth aspect, fitness for the package data may be determined on the basis of version information on software pieces involved with the update request. In other words, for example, it may be determined whether the package data fits the version information on software pieces involved with the update request.

The updating method for software according to the fifth aspect may include determining that the software update that is based on the update request can be performed when fitness for the package data is met, and determining not to perform the software update that is based on the update request when fitness for the package data is not met. In other words, for example, it may be determined that the software update that is based on the update request can be performed when the package data fits the version information on software pieces involved with the update request and it may be determined not to perform the software update that is based on the update request when the package data does not fit the version information on software pieces involved with the update request.

By performing management in the form of package data as described above, one or more of the following effects may be obtained. For example, it may be easy to determine whether or not an update that is based on an update request RQ is executable.

For example, a combination of the versions of software pieces that is not expected by a developer can be prevented from being created as a result of updating software.

For example, it may be easy to recover a previous combination of versions, that is, to perform so-called regression because of some cause (for example, an update failure or the like).

For example, it may be easy to manage a combination of the versions of software pieces for a vehicle.

A sixth aspect of the present disclosure relates to an updating program for software for a vehicle in which a plurality of ECUs (Electronic Control Units) are mounted. The program includes causing a computer to execute following steps (1) to (3).

Specifically, included are (1) receiving an update request to software stored in a memory of the ECU, (2) identifying a software group to be subjected to an update in response to the update request, on the basis of compatibility information on the software group (for example, a firmware group) that is used to realize a predetermined function, and (3) determining that a software update that is based on the update request can be performed when the number of times of rewriting is less than a predetermined reference value, with regard to all memories in which the software group is stored among those of the plurality of ECUs, and determining not to perform the software update that is based on the update request when the number of times of rewriting of any one of the memories in which the software group is stored reaches the predetermined reference value.

Further, in some exemplary embodiments, the sixth aspect may be implemented as a computer program (i.e. computer program product) for updating software for a vehicle in which a plurality of ECUs is mounted, the computer program comprising instructions which, when executed by a computer, causing the computer to perform the method according to any one of the first to fifth aspects described above.

According to the sixth aspect described above, as in the first aspect, an OTA failure due to a limit of memory rewriting can be prevented.

Moreover, consistency between or among related functions can be ensured because, in response to an update request RQ, it is or may be determined whether an update can be performed, by treating those functions that realize a predetermined function as one by using compatibility information on a software group (for example, a firmware group) used to realize the predetermined function.

A seventh aspect of the present disclosure relates to an updating system for software for a vehicle in which a plurality of ECUs (Electronic Control Units) including a first ECU and a second ECU are mounted. Each of the plurality of ECUs has a software-rewritable memory.

In an example in the above-described embodiment, the ECU 1, the ECU 2, the ECU 3, the ECU G are examples of the plurality of ECUs. In the example in the above-described embodiment, the ECU 1 has the memory M1. Similarly in the example in the above-described embodiment, the ECU 2 has the memory M2, the ECU 3 has the memory M3, and the ECU G has the memory M4.

Further, in the example in the above-described embodiment, the updating system for software may include the communication interface 18 that receives an update request RQ to software.

In addition, in the example in the above-described embodiment, the updating system may have the management module 11 that manages the numbers of times of rewriting of the memories M of the plurality of ECUs, version information on software stored in each of the ECUs, and compatibility information on versions in a software group that is used to realize a predetermined function.

In an example in the embodiment, the numbers of times of rewriting of the memories M, the version information on software, and the compatibility information on software are stored in the memory M4 and managed by the management module 11.

Furthermore, in the example in the above-described embodiment, the updating system includes a determination module that, when an update request to first software stored in the memory of the first ECU is received by the communication interface 18, identifies other second software to be updated together with the first software, on the basis of the version information and the compatibility information, and may determine whether or not to perform a software update that is based on the update request, on the basis of the number of times of rewriting of the memory of the first ECU and the number of times of rewriting of the memory of the second ECU in which the second software is stored.

According to the seventh aspect described above, as in the first aspect, an OTA failure due to a limit of memory rewriting can be prevented.

Moreover, consistency between or among related functions can be ensured because, in response to an update request RQ, it is determined whether an update can be performed, by treating those functions that realize a predetermined function as one by using compatibility information on a software group (for example, a firmware group) used to realize the predetermined function.

As an eighth aspect, the management module 11 and the determination module 15 may be included in any of the plurality of ECUs in the seventh aspect described above.

Thus, since the processing of determining an update can be completed in the vehicle V, a load on a management apparatus (for example, a server apparatus) that manages software update for a vehicle can be reduced.

As a ninth aspect, the server apparatus 200 configured to be able to communicate with the vehicle V may be further included in the seventh aspect described above. The management module 211 and the determination module 215 may be included in the server apparatus.

Thus, since an update request is transmitted to a vehicle V after it is determined whether an update is executable or not, the load of processing on the vehicle V can be reduced.

### (Other embodiments)

The technology disclosed above is not limited to the above-described embodiment, and substitutions are possible without departing from the scope of the claims.

### [Industrial Applicability]

The technology disclosed herein may be useful as an updating method, an updating system, and/or an updating program for software for a vehicle.

### [Reference Signs List]

- V: Vehicle
- M, M1, M2, M3, M4: Memory
- ECU 1, ECU 2, ECU 3,: ECU G First ECU, Second ECU
- 11: Management module
- 15: Determination module
- 18: Communication interface (interface)
- 200: Server apparatus
- 211: Management module
- 215: Determination module

## Claims

1. An updating method, to be executed by a computer, for software for a vehicle (V) in which a plurality of Electronic Control Units, ECUs, are mounted, the updating method for software comprising:
receiving an update request to software stored in a memory (M) of the ECU;
identifying a software group to be subjected to an update in response to the update request, based on compatibility information on the software group that is used to realize a predetermined function; and
determining that a software update that is based on the update request can be performed when the number of times of rewriting is less than a predetermined reference value with regard to all memories (M) in which the software group is stored among those of the plurality of ECUs, and determining not to perform the software update that is based on the update request when the number of times of rewriting of any one of the memories (M) in which the software group is stored reaches the predetermined reference value.

2. The updating method for software according to claim 1, wherein
the update request includes an update priority, and
determining whether to perform the software update that is based on the update request is performed on the basis of comparison of the numbers of times of rewriting of the memories (M) with the reference value, and the update priority.

3. The updating method for software according to claim 2, wherein the higher the update priority is, the higher the predetermined reference value is set.

4. The updating method for software according to any one of the preceding claims, wherein the compatibility information is included in package data in which software pieces for related functions are associated with each other by using version information on each software piece.

5. The updating method for software according to any one of the preceding claims, wherein
the update request includes version information on the software to be updated,
update data to be used for the update is provided as package data as the software group, and
the updating method comprises:
determining fitness for the package data, on the basis of version information on software pieces involved with the update request, and
determining that the software update that is based on the update request can be performed when fitness for the package data is met, and determining not to perform the software update that is based on the update request when fitness for the package data is not met.

6. A computer program for updating software for a vehicle (V) in which a plurality of Electronic Control Units, ECUs, are mounted, the computer program comprising instructions which, when executed by a computer, causing the computer to perform the method according to any one of the preceding claims.

7. An updating system for software for a vehicle (V) in which a plurality of Electronic Control Units, ECUs, including a first ECU and a second ECU, are mounted, each of the plurality of ECUs having a software-rewritable memory (M), the updating system for software comprising:
an interface (18) that is configured to receive an update request to software;
a management module (11, 211) that is configured to manage the numbers of times of rewriting of the memories (M) of the plurality of ECUs, version information on software stored in each of the ECUs, and compatibility information on versions in a software group that is used to realize a predetermined function; and
a determination module (15, 215) that is configured to, when an update request to first software stored in the memory (M) of the first ECU is received by the interface, identify other second software to be updated together with the first software, on the basis of the version information and the compatibility information, and determine whether or not to perform a software update that is based on the update request, on the basis of the number of times of rewriting of the memory of the first ECU and the number of times of rewriting of the memory of the second ECU in which the second software is stored.

8. The updating system for software according to claim 7, wherein the management module (11) and the determination module (15) are included in any of the plurality of ECUs.

9. The updating system for software according to claim 7, further comprising a server apparatus (200) configured to be able to communicate with the vehicle (V),
wherein the management module (211) and the determination module (215) are included in the server apparatus (200).

10. The updating system for software according to any one of claims 7 to 9, wherein
the update request includes an update priority, and
determining whether to perform the software update that is based on the update request is performed on the basis of comparison of the numbers of times of rewriting of the memories with the reference value, and the update priority.

11. The updating system for software according to claim 10, wherein the higher the update priority is, the higher the predetermined reference value is set.

12. The updating system for software according to any one of claims 7 to 11, wherein the compatibility information is included in package data in which software pieces for related functions are associated with each other by using version information on each software piece.

13. The updating system for software according to any one of claims 7 to 12, wherein
the update request includes version information on the software to be updated,
update data to be used for the update is provided as package data as the software group, and
the determination module (15, 215) is further configured to:
determine fitness for the package data, on the basis of version information on software pieces involved with the update request, and
determine that the software update that is based on the update request can be performed when fitness for the package data is met, and determine not to perform the software update that is based on the update request when fitness for the package data is not met.
